# EUROPEAN PATENT APPLICATION

(11) **EP 4 198 667 A1**
(43) Date of publication of application: **21.06.2023**
(21) Application number: 21216019.6
(22) Date of filing: 20.12.2021
(51) Int. Cl.: G05B 23/02, G05B 19/406

(54) **AUTOMATED SYSTEM FOR RELIABLE AND SECURE OPERATION OF IOT DEVICE FLEETS**

(71) Applicant: BASF SE, 67056 Ludwigshafen am Rhein (DE)
(72) Inventor: CHESNEAU, Frederick Francois, 67061 Ludwigshafen (DE)
(74) Representative: Eisenführ Speiser

(57) **Abstract**

The invention refers to a device 120 for monitoring a plurality of edge devices 111,112,113,114,115 provided at an industrial plant 110 and adapted for collecting and/or handling technical data related to production processes and/or assets. The device comprises a data providing unit 121 for providing monitoring data that are based on technical data of a respective edge device. A model providing unit 122 provides a respective model adapted to model a functional behaviour of the respective edge device based on monitoring data. A prediction unit 123 applies the respective model to existing monitoring data to determine an expected behaviour of the respective edge device, and an abnormality detection unit 124 detects an abnormal behaviour based on the expected behaviour of the respective edge device. A controlling unit 125 provides control signals for causing a reaction based on the detected abnormal behaviour.

## Description

### FIELD OF THE INVENTION

The invention refers to a device, a system comprising the device, a method, and a computer program product for monitoring a plurality of edge devices. Moreover, the invention refers to an apparatus, a method and a computer program product for training a virtual device model.

### BACKGROUND OF THE INVENTION

Today, in particular, in industrial applications, it is common to utilize a plurality of edge devices from tens to several thousands of such devices that are utilized for monitoring, managing, and/or handling industrial production processes in an industrial plant. For example, such edge devices can refer to or be communicatively coupled to temperature sensors attached to chemical reactors, substance monitoring devices attached to fume hoods or flow sensors provided in pipelines, and are adapted to measure/receive respective process data, for instance, a temperature, to process this data and/or to provide this data, for instance, by a network connection, to a controlling system of the industrial plant. Thus, these edge devices and their processing of measured and/or received data is today often essential for the controlling and secure managing of production processes in industrial plants. However, monitoring the functioning of these edge devices themselves is often a difficult and cumbersome task due to the huge amounts of utilized edge devices and the often difficult to reach location of the respective edge devices. Moreover, each monitoring of the edge devices has to comply with respective strict cyber security guidelines and network segregations in modern industrial plant security and controlling solutions.

Thus, it would be advantageous to provide a solution for monitoring edge devices in an industrial setting in a secure and easy manner that allows to increase the security of production processes in an industrial plant.

### SUMMARY OF THE INVENTION

It is an object of the present invention to provide a device, a method and a computer program product that allow for an easy and secure monitoring of a plurality of edge devices in an industrial setting that increases the security of production processes in an industrial setting. Moreover, it is an object of the present invention to provide a training apparatus, a training method, and a computer program product for training a device model that can be utilized in the device, method and computer program product for monitoring the plurality of edge devices.

In a first aspect of the present invention, a device for monitoring a plurality of edge devices is presented, wherein the edge devices are provided at a plurality of locations at an industrial plant and are adapted for collecting and/or handling technical data related to production processes in the industrial plant, wherein the device comprises a) a monitoring data providing unit for providing monitoring data that are based on collected technical data for at least one of the plurality of edge devices, wherein the monitoring data has been generated by the edge devices and is indicative of a functional state of a respective edge device, b) a device model providing unit for providing for a respective edge device a respective virtual device model, wherein a respective virtual device model is adapted to model a functional behaviour of the respective edge device based on monitoring data of the respective edge device, c) an edge device behaviour prediction unit for applying for a respective edge device the respectively provided virtual device model to existing monitoring data of the respective edge device to determine an expected current and/or future functional behaviour of the respective edge device, d) an abnormality detection unit for detecting an abnormal behaviour of a respective edge device based on the expected current and/or future functional behaviour of the respective edge device, and e) a controlling unit for providing control signals for causing a reaction based on the detected abnormal behaviour of a respective edge device.

Since the device utilizes monitoring data that is indicative of a functional state of a respective edge device, the edge device can be monitored based on data directly provided by the edge device itself allowing for a very accurate prediction. Moreover, since for the edge device behaviour prediction a virtual device model is utilized that can predict an expected current and/or future functional behaviour of a respective edge device based on the monitoring data, a huge amount of edge devices can be monitored accurately in a very easy manner. Since a huge amount of edge devices can be monitored at the same time in an easy and accurate manner, the security of processes in an industrial plant can be increased. Furthermore, since a virtual device model is used that can model the behaviour of an edge device based on the monitoring data that is indicative of the functioning of the edge device itself, no real security relevant data with respect to a process performed by the industrial plant has to be communicated outside of the industrial plant, such that the security of the plant monitoring system is not compromised.

The device is generally adapted to monitor a plurality of edge devices, wherein the plurality of edge devices refers to at least two edge devices, preferably to more than ten edge devices, more preferably to more than hundred edge devices. Edge devices can refer to any kind of computational devices that are part of an edge of a network and can communicate data to a subordinate network component, for instance, a cloud or cloud storage. In addition to providing data to other components of a network, an edge device can provide further functionalities like data processing functionalities for processing or pre-processing the data before providing the same. Moreover, an edge device can itself comprise measurement functionalities for measuring the data that is provided. For example, the edge device can refer to a computing device connected to a temperature sensor attached to a chemical reactor that is adapted to process the temperature data from the sensor, for instance, to determine whether or not a temperature threshold is reached, and to provide the temperature data or the processed temperature data to further components of the network, for instance, to a cloud storage, or a control system for controlling the chemical reaction in the chemical reactor. Thus, it is preferred that the edge devices that are monitored by the device are provided at a plurality of locations at an industrial plant and are adapted for collecting and/or handling technical data related to production processes in the industrial plant. Moreover, the edge devices can also be located in a plurality of locations of more than one industrial plant, for instance, in a plurality of locations of different industrial plants all connected to the same network.

The monitoring data providing unit is adapted to provide monitoring data for at least one, preferably, for each, of the plurality of edge devices. For example, the monitoring data providing unit can refer to or can be communicatively coupled to a storage unit on which the monitoring data is already stored. However, the monitoring data providing unit can also refer to a receiving unit for receiving the monitoring data, for instance, from each of the plurality of edge devices. The monitoring data is based on technical data, i.e. data resulting from technical processes, and refers to data that has been generated by the edge devices, preferably, by each edge device, and is indicative of a functional state of a respective edge device. Thus, the monitoring data refers to data that provides information on the functioning of the edge devices themselves. Preferably, the monitoring data refers to data that is generated alone for the purpose of monitoring a functioning of a respective edge device, for instance, process or temperature data indicative of the temperature of a processor of the edge device, energy consumption data indicative of the energy consumption of the edge device, communication bandwidth data that is indicative of a communication bandwidth used by the edge device, etc. However, the monitoring data can also refer to data that has been generated for different purposes as long as it is indicative of a functional state of a respective edge device. For example, the sensor data provided to the network by the edge device can also be indicative of the functional state of the network device. In particular, the amount of data provided or the number of measurements per time frame provided by the edge device can be indicative, for instance, of a bandwidth used by the edge device. Moreover, a change, for instance, in the number of measurement points per time frame provided by the edge device can also be indicative of a change in the functional state of the edge device.

Generally, the generating of the monitoring data by an edge device can also refer to a collecting, handling and/or providing of the monitoring data. For example, the edge device can generate the monitoring data by receiving the monitoring data from another measurement device and providing the monitoring data, for example, to a storage. Moreover, the generating can also refer to a transforming, reformatting and/or editing of data received from other devices or measured by a part of the edge device itself.

The device model providing unit is adapted to provide for a respective edge device a respective virtual device model, preferably, the device model providing unit is adapted to provide for each edge device a respective individual virtual device model. However, in some cases a virtual device model is only necessary for some of the edge devices, for instance, in cases in which some edge devices are monitored differently or in which nearby edge devices can be monitored using the same virtual device model, for instance, due to being of the same kind and being part of the same environment. The device model providing unit can refer to or be communicatively coupled to a storage unit on which respective virtual device models are already stored. For providing a virtual device model the device model providing unit can be adapted to access such a storage and select a stored virtual device model, in particular, select a virtual device model of a respective edge device, for example, of an edge device for which the functional behaviour shall be determined.

Generally, a virtual device model is adapted to model a functional behaviour of a respective edge device to which the virtual device model corresponds based on the monitoring data. Generally, a functional behaviour of a respective edge device can refer to any behaviour of the edge device that is indicative of a functional state of the respective edge device. For example, the functional behaviour that can be modelled by the virtual device model can refer to one or more, for instance, also to all, functions provided by the respective edge device. For example, the modelled functional behaviour of the respective edge device can refer to a degree of processor capacity utilization, an amount of data points per time frame sent by the edge device, a bandwidth utilized by the edge device, a processor temperature of the edge device, etc. Thus, the modelled functional behaviour can refer to the same quantities as the monitoring data, for instance, the virtual device model can be adapted to provide based on existing monitoring data referring to a bandwidth usage of the edge device as modelled functional behaviour a current and/or future bandwidth usage of the edge device. However, the functional behaviour modelled by a virtual device model can also refer to another quantity than the quantity provided by the monitoring data. For example, the monitoring data can refer to a temperature of the processor of the edge device and the modelled functional behaviour can refer to an amount of data points provided per time frame. Moreover, the virtual device model can be adapted to model based on the monitoring data a functional behaviour of the respective edge device that refers to the functional behaviour of the respective edge device at the same time as the monitoring data has been determined and/or that refers to some predetermined time intervals after the respective monitoring data has been determined. Thus, if a current monitoring data is provided to the virtual device model, the virtual device model is adapted to model a current functional behaviour and/or a future functional behaviour.

The virtual device model can refer, for instance, to an algorithm providing predetermined functional relations between respective monitoring data and a functional behaviour of the respective edge device. For example, a temperature of a processor of the edge device can provide a direct functional relation to an amount of processed data and, depending on the respective edge device, thus also on the amount of provided data points per time frame. In particular, the virtual device model can be a virtual twin of the respective edge device that, based on the monitoring data provided by the respective edge device, shows the same functional behaviour as the respective edge device. A digital twin refers, generally, to a digital simulation model that is based on information about the technical components of the edge device and/or functional relations between technical components of the edge device that allow for a simulation of a functional behaviour of the edge device based on, for instance, the monitoring data. For example, a digital twin can comprise a simulation of a storage or processor unit of the edge device, wherein the simulation is based on knowledge of the technical specifications of the storage or processor unit and allows for a prediction of an edge device temperature based on, for example, a data output of the edge device.

However, in another preferred embodiment the virtual device model refers to a machine learning based model that is trained based on past monitoring data and a corresponding known behaviour of the edge device. Thus, the virtual device model can be accurately linked to an individual behaviour of a respective edge device and allow to very accurately predict the behaviour of the edge device. For example, the virtual device model can utilize any generally known machine learning algorithm, like a neural network, a regression model, etc. In particular, it is preferred that the device comprises further a retraining unit adapted to compare continuously an expected current and/or future behaviour of an edge device with an actual current and/or future behaviour of the edge device indicated by current and/or future monitoring data and if a difference between the expected behaviour and the actual behaviour is determined lying above a predetermined threshold, retrain the virtual device model based on the differing behaviour of the edge device and the corresponding monitoring data. This retraining mechanism allows to keep the virtual device model of an edge device to be always up-to-date and to allow for an accurate prediction even for situations and functional behaviours that not occur very often. In contrast to a digital twin, a machine learning based virtual device model can be provided without any information about the technical components of the edge device and can be based very simply on the provided training data, i.e. past behaviour, of the edge device. Thus, for a generation of a machine learning based virtual device model no further knowledge about the technical specifics of an edge device is necessary.

The edge device behaviour prediction unit is adapted to apply for a respective edge device that shall be monitored the respectively provided virtual device model to existing monitoring data of the respective edge device to determine an expected current and/or future functional behaviour of the respective edge device. Generally, the existing monitoring data that can be monitoring data of a specific time frame from a past point in time to a most current point in time, is provided as input to the virtual device model of a respective edge device that shall be monitored. The virtual device model then provides as output an expected current and/or future functional behaviour in accordance with the above explanations. In particular, a current functional behaviour can refer to a functional behaviour related to a time point or frame for which the most current monitoring data is provided, whereas a future functional behaviour can refer to a functional behaviour related to some predetermined time point or frame in the future of the provided most current monitoring data.

The abnormality detection unit is then adapted to detect an abnormal behaviour of a respective edge device based on the expected current and/or future functional behaviour of the respective edge device. For example, the abnormality detection unit can utilize predetermined thresholds for a respective functional behaviour and compare the expected current and/or future functional behaviour to the respective thresholds and determine an abnormal behaviour if the current and/or future functional behaviour lies above or below a respective threshold. For example, the abnormality detection unit can be provided with a threshold for a temperature of a processor of an edge device that shall not be exceeded, wherein the abnormality detection unit is then adapted to detect an abnormal behaviour if the predicted current and/or future functional behaviour indicates that the processor reaches a temperature lying above the predetermined temperature threshold. However, the abnormality detection unit can also be adapted to further utilize actual monitoring data of the edge device, for instance, most current monitoring data of the edge device for comparing the actual monitoring data with the predicted current and/or future functional behaviour of the edge device for determining an abnormal behaviour. In a preferred embodiment, the expected current and/or future behaviour of an edge device is utilized as a baseline for the monitoring data of the edge device, wherein the baseline refers to a normal functioning of the edge device and wherein the abnormality detection unit is adapted to detect abnormal behaviour of an edge device by comparing the expected baseline with actual monitoring data of the edge device, wherein an abnormal behaviour is determined, when the difference between the baseline and the actual monitoring data lies above a predetermined threshold. Utilizing the expected current and/or future behaviour of the edge device as a baseline for the monitoring data of the edge device, in particular, when the expected current and/or future behaviour refers to the same quantity as a monitoring data of the edge device, is advantageous for cases in which the virtual device model has only been trained using training data referring to a normal functioning of the edge device. For example, based on the existing monitoring data a certain processor temperature is predicted for the next two hours as future behaviour, wherein if during the next two hours the actual monitoring data being indicative of the processor temperature indicates a deviation from this predicted temperature lying above a predetermined threshold, the abnormality detection unit can be adapted to determine that an abnormal behaviour has occurred for this edge device.

Generally, the cause of an abnormal behaviour does not have to be determined. For example, the cause of the abnormal behaviour does not even have to lie with the edge device itself but can also lie with other devices or functions provided to the edge device. For example, an abnormal behaviour of the edge device can be caused by a functional disturbance of a sensor providing data to the edge device or by a disruption of an electric supply to the edge device due to an instable cable connection to the edge device. All such causes can lead to a difference between the predicted behaviour of the edge device and the actual behaviour of the edge device and thus to an abnormal behaviour. However, for the functioning of the invention it is not necessary to determine the exact cause of an abnormal behaviour or to differentiate between different causes, as it would be the case, for instance, for repairing an edge device. Thus, it can be generally regarded that the abnormal behaviour of the edge device is indicative of an abnormality somewhere in the edge device itself and/or in components that can influence the edge device in any way.

The controlling unit is then adapted to provide control signals adapted to cause a reaction based on the detected abnormal behaviour of a respective edge device. For example, the control signals can refer to controlling an interface with a user that allows to notify a user of the detected abnormal behaviour. However, a user can then be provided, for instance, with respective possibilities for dealing with the detected abnormal behaviour of a respective edge device and can then initiate, for instance, via an input, one of these possibilities. However, in a preferred embodiment, the control signals are adapted for directly causing a reaction of the respective edge device for which an abnormal behaviour has been detected, for instance, by directly providing control signals to the respective edge device. Such control signals can, for instance, refer to initiating a shutdown of the respective edge device to avoid damage to the respective edge device due to the abnormal behaviour, or can refer to the initiation of a rebooting of the respective edge device in order to try to solve the problems causing the abnormal behaviour. Preferably, the control signals refer to signals that cause a shutdown of an edge device, if an abnormal behaviour is detected that indicates a failure of the edge device within a predetermined time in the future.

In a preferred embodiment, the device further comprises a control model providing unit adapted to provide a control model for controlling the edge devices, wherein the control model is adapted to determine control signals for causing a reaction based on a detected abnormal behaviour and wherein the controlling unit is adapted to utilize the control model to provide control signals based on the detected abnormal behaviour. For example, the control model can utilize predetermined relations between detected abnormal behaviours and respective control signals that can be provided, for instance, in a lookup table. For example, it can be predetermined that in case of a detected abnormal behaviour relating to a too high processor temperature of the edge device, the controlling unit shall provide control signals initiating a shutdown of the respective edge device, whereas for detected abnormal behaviour related to providing a less than normal amount of data points per time, the controlling unit shall provide control signals leading to a notification of a user that shall cause the user to check, for instance, a connection of the edge device with the respective sensor. In a preferred embodiment, the control model refers to a machine learning based control model that has been trained based on past detected abnormal behaviours of edge devices and corresponding utilized past control signals. Utilizing a machine learning based control model allows to individually adapt the control model to specific situations and to specific edge devices.

Generally, a control model as described above can be provided for each of the edge devices. Such a control model can then be adapted individually with respect to a specific edge device and the control model providing unit can be adapted to select the respective control model based on the edge device for which the abnormal behaviour has been detected. Such an embodiment has the advantage that the control model can be adapted very accurately to a specific edge device, for instance, based on a past behaviour and controlling of the edge device. However, the control model can also be provided for a specific type of edge devices or for all edge devices the same control model can be provided. In this case, the control model is less individually adapted to specific edge devices but instead allows for a more general controlling of the edge devices based on common rules or a common experience with the edge devices.

In an embodiment, the virtual device model is further adapted to predict an expected date for a necessary maintenance action, i.e. an expected maintenance action date, for the respective edge device based on the provided monitoring data, wherein the edge device behaviour prediction unit is adapted to determine the expected maintenance action date by applying a provided virtual device model to the monitoring data of the respective edge device and wherein the controlling unit is further adapted to provide control signals for causing a reaction based on the determined expected maintenance action date for the edge device. In particular, the virtual device model can be trained utilizing existing past monitoring data and respective maintenance action dates to train a prediction of a necessary maintenance action date. A maintenance action can refer, for instance, to a change of a power source, like a battery, a cleaning action, for instance, for cleaning a filter or a sensor unit, a replacement action for replacing one or more components of the edge device or the complete edge device itself. Respective provided predictions for maintenance actions allow for an easy planning and scheduling of such maintenance actions. Moreover, in contrast to maintenance actions that are simply planned and determined based on, for instance, a respective timeline, a prediction of necessary maintenance action based on actual monitoring data allows to avoid unnecessary maintenance actions and thus reduces a resource consumption for the maintenance of respective edge devices.

In a further aspect of the invention, a system is presented, wherein the system comprises a) a plurality of edge devices provided at a plurality of locations at an industrial plant and are adapted for collecting and/or handling technical data related to production processes in the industrial plant, wherein an edge device is adapted to provide monitoring data indicative of a functional state of a respective edge device, and b) a device according to any of the preceding claims.

In a further aspect of the invention, a training apparatus for training a virtual device model is presented, wherein the training apparatus comprises a) a training data providing unit for providing training data, wherein the training data comprises past monitoring data of an edge device and a corresponding past behaviour of the edge device, b) a virtual edge device model providing unit for providing a trainable virtual edge device model, and c) a training unit for training the virtual edge device model by applying the virtual edge device model to the training data and training the virtual edge device model such that the respective virtual edge device model is adapted to model a functional behaviour of the respective edge device based on monitoring data and for providing the trained virtual edge device model after the training.

In a further aspect of the invention, a method for monitoring a plurality of edge devices is presented, wherein the edge devices are provided at a plurality of locations at an industrial plant and are adapted for collecting and/or handling technical data related to production processes in the industrial plant, wherein the method comprises a) providing monitoring data based on technical data for at least one of the plurality of edge devices, wherein the monitoring data has been generated by the edge devices and is indicative of a functional state of a respective edge device, b) providing for a respective edge device a respective virtual device model, wherein a respective virtual device model is adapted to model a functional behaviour of the respective edge device based on monitoring data of the respective edge device, c) applying for a respective edge device the respectively provided virtual device model to existing monitoring data of the respective edge device to determine an expected current and/or future functional behaviour of the respective edge device, d) detecting an abnormal behaviour of a respective edge device based on the expected current and/or future functional behaviour of the respective edge device, and e) providing control signals for causing a reaction based on the detected abnormal behaviour of a respective edge device.

In a further aspect of the invention, a training method for training a virtual device model is presented providing training data, wherein the training data comprises past monitoring data of an edge device and a corresponding past behaviour of the edge device, a) providing a trainable virtual edge device model, and b) training the virtual edge device model by applying the virtual edge device model to the training data and training the virtual edge device model such that the respective virtual device model is adapted to model a functioning of the respective edge device based on monitoring data and providing the trained virtual edge device model after the training.

In a further aspect of the invention, a computer program product for monitoring a plurality of edge devices is presented, wherein the computer program product comprises program code means for causing the device and/or system as described above, respectively, to execute the method as described above.

In a further aspect of the invention, a computer program product for training a virtual device model is presented, wherein the computer program product comprises program code means for causing the apparatus as described above to execute the method as described above.

It shall be understood that the device as described above, the system comprising the device as described above, the method as described above and the computer program product as described above for monitoring edge devices have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

- Fig. 1: shows schematically and exemplarily an embodiment of a system comprising a plurality of edge devices and a device for monitoring the plurality of edge devices,
- Fig. 2: shows schematically and exemplarily a training apparatus for training a virtual device model,
- Fig. 3: shows schematically and exemplarily a flow chart of a method for monitoring a plurality of edge devices,
- Fig. 4: shows schematically and exemplarily a flow chart of a method for training a virtual device model, and
- Figs. 5 to 8: show schematically and exemplarily further details and principles of the invention.

### DETAILED DESCRIPTION OF EMBODIMENTS

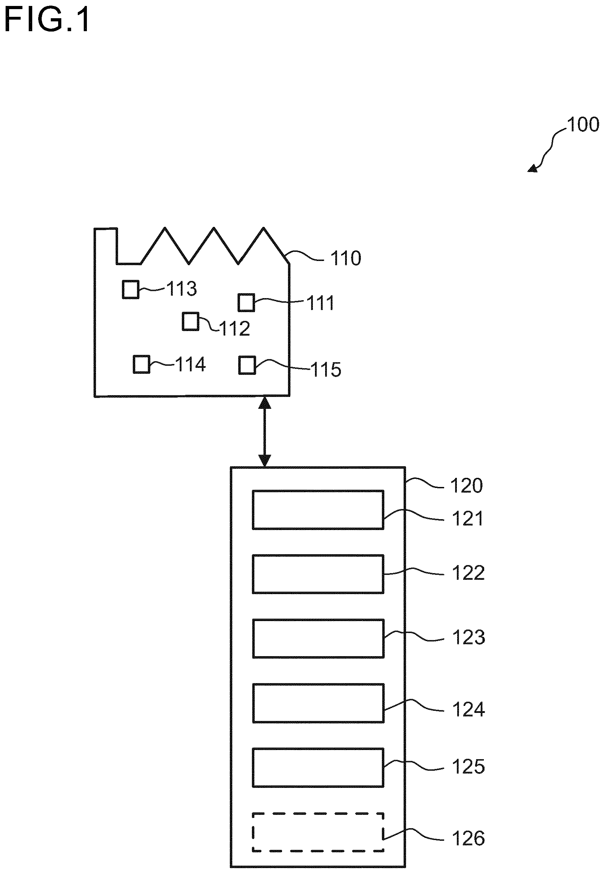

Fig. 1 shows schematically and exemplarily a system 100 comprising a plurality of edge devices 111, 112, 113, 114, 115 and a device 120 for monitoring the plurality of edge devices 111, 112, 113, 114, 115. The edge devices 111, 112, 113, 114, 115 of the plurality of edge devices 111, 112, 113, 114, 115 are in this example located at a plurality of locations in an industrial plant 110. Moreover, the edge devices 111, 112, 113, 114, 115 are adapted to collect and/or handle technical data related to production processes in the industrial plant 110.

Generally, the industrial plant 110 can refer to any technical infrastructure that is used for an industrial purpose. An industrial purpose may be manufacturing or processing of one or more industrial products, i.e., a manufacturing process or a processing performed by the industrial plant. For example, the industrial purpose can refer to the production of a product. The product can, for example, be any physical product such as a chemical, a biological, a pharmaceutical, a food, a beverage, a textile, a metal, a plastic, or a semiconductor. Additionally or alternatively, the product can even be a service product such as electricity, heating, air conditioning, waste treatment such as recycling, chemical treatment such as breakdown or dissolution, or even incineration, etc. Accordingly, the industrial plant 110 may be one or more of a chemical plant, a process plant, a pharmaceutical plant, a fossil fuel processing facility such as an oil and/or natural gas valve, a refinery, a petrochemical plant, a cracking plant, and the like. The industrial plant 110 can even be any of a distillery, an incinerator, or a power plant. The industrial plant 110 can even be a combination of any of the examples given above.

For performing a production process, the industrial plant 110 comprises a technical infrastructure which can be controlled by control parameters implemented, for instance, by a process control system into the technical infrastructure. The technical infrastructure may comprise equipment or process units such as any one or more of a heat exchanger, a column such as a fractionating column, a furnace, a reaction chamber, a cracking unit, a storage tank, a precipitator, a pipeline, a stack, a filter, a valve, an actuator, a transformer, a circuit breaker, a machinery, e.g., a heavy duty rotating equipment such as a turbine, a generator, a pulveriser, a compressor, a fan, a pump, a motor, etc. Moreover, the industrial plant 110 typically comprises a plurality of sensors that allow to measure operational parameters, i.e. technical data, of the technical infrastructure. The sensors can referto or can be communicatively coupled to one or more of the edge devices that can collect, process and/or further communicate the measured operational parameters. For example, the measured operational parameters can be processed and/or communicated by the edge devices such that the operational parameters can also be utilized by a process control system for controlling the production process in the industrial plant 110. The operational parameters measured by the sensors may relate to various process parameters and/or parameters related to the equipment or the process units. For example, sensors may be used for measuring a process parameter such as a flow rate within a pipeline, a fluid level in a tank, a temperature of a furnace, a chemical composition of a gas, etc., and some sensors can be used for measuring vibrations of a turbine, a speed of a fan, an opening of a valve, a corrosion of a pipeline, a voltage across a transformer, etc. The difference between the sensors cannot only be based on the parameter that they sense but can also be based on the sensing principle that the respective sensors use. Some examples of sensors based on the parameter that they sense may comprise: temperature sensors, pressure sensors, radiation sensors such as light sensors, flow sensors, vibration sensors, displacement sensors and chemical sensors such as those for detecting a specific matter such as a gas. Examples of sensors that differ in terms of the sensing principle that they employ may, for example, be: piezoelectric sensors, piezoresistive sensors, thermocouples, impedance sensors such as capacitive sensors and resistive sensors, and so forth. For example, the sensors can measure operational parameters in form of time-dependent data values, i.e. data values that are associated with the specific time at which they have been measured by the sensor.

In addition to the functions described above, the edge devices 111, 112, 113, 114, 115 are adapted to generate monitoring data that is indicative of a functional state of a respective edge device. The monitoring data can, for instance, refer to measurements of an internal functioning of the edge device, for instance, to a processor temperature, a processor capacity usage, a bandwidth usage, a storage access capacity, etc. However, the monitoring data can also refer to technical data, i.e. operational parameters, that is handled and/or collected by the edge device, wherein in this case not the technical data itself is utilized as monitoring data but the characteristics of the technical data, for instance, the amount of data points collected, handled, or provided for an edge device in a predetermined time period, time periods between a handling, collecting or providing of different data points, etc. Such characteristics of the technical data can also be regarded as metadata of the technical data.

For monitoring the plurality of edge devices 111, 112, 113, 114, 115, the device 120 is provided in the system 100. The device 100 comprises a monitoring data providing unit 121, a device model providing unit 122, an edge device behaviour prediction unit 123, an abnormality detection unit 124 and a controlling unit 125. Optionally, the device 120 can further comprise a retraining unit 126.

The monitoring data providing unit 121 is adapted to provide the monitoring data generated by the respective edge devices 111, 112, 113, 114, 115. For example, the monitoring data providing unit 121 can directly receive the monitoring data of the plurality of edge devices 111, 112, 113, 114, 115 for providing the same, for instance, to the edge device behaviour prediction unit 123. However, the monitoring data providing unit 121 can also have access to a storage unit on which the monitoring data of the plurality of edge devices 111, 112, 113, 114, 115 is already stored for providing the same. In particular, the monitoring data providing unit 121 can be regarded as an interface between the plurality of edge devices 111, 112, 113, 114, 115 and the device 120 or can be part of such an interface.

The device model providing unit 122 is adapted to provide for a respective edge device that shall be monitored by the system 100, for instance, edge device 111, a respective virtual device model. The respective virtual device model corresponding to the edge device 111 is adapted to model a functional behaviour of the respective edge device, in this case the edge device 111, based on monitoring data of the respective edge device 111. The modelled functional behaviour of the respective edge device can refer to any functional behaviour of the respective edge device, for instance, can refer to a processor temperature, a bandwidth usage, an amount of data points processed per time period, processor capacity usage, etc. In particular, the functional behaviour of the respective edge device can refer to the same one or more quantities that are provided by the monitoring data. For example, if the monitoring data comprises data on the processor temperature, the virtual device model can be adapted to model as functional behaviour of the respective edge device a processor temperature. However, the virtual device model can also be adapted alternatively or additionally to model other quantities than the quantities provided in the monitoring data. For example, the virtual device model can be adapted to model as functional behaviour an amount of data points provided by the edge device per time period, while the monitoring data comprises data with respect to a processor temperature.

The virtual device model can be based on known or experimentally determined functional relations between respective monitoring data and a functional behaviour of a respective edge device. Moreover, the respective virtual device model can be individualized to a respective edge device, for instance, by choosing model parameters, for instance, regression parameters, to fit a respective relation to the specific behaviour of an individual edge device. Further, the virtual device model can refer to a digital twin of the edge device that is based on a simulation of technical components and, optionally, their functional interrelations, to predict the functional behaviour of the edge device. For example, for each specific technical component, functional relations between different technical data can be known and used for simulating a functional behaviour of the edge device, based on the monitoring data. Also, in this case, the respective simulations can be adapted based on a known specific behaviour of an edge device, for example, by adapting respective simulating parameters.

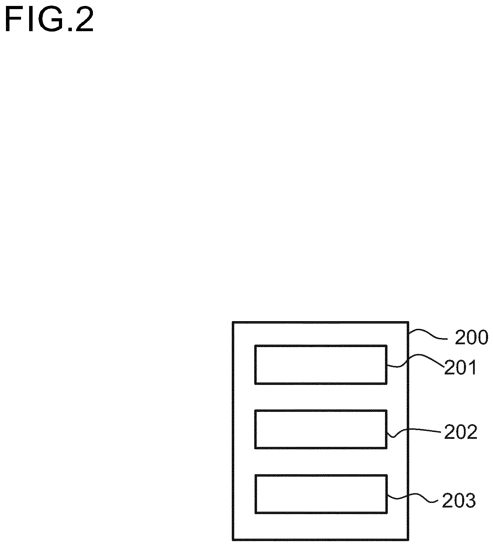

In a preferred embodiment, the virtual device model refers to a machine learning based virtual device model that is trained based on past monitoring data and corresponding known behaviour of an edge device. For example, the virtual device model can be trained utilizing training apparatus 200 as shown in Fig. 2.

The training apparatus 200 shown in Fig. 2 comprises a training data providing unit 201, a virtual edge device model providing unit 202 and a training unit 203. The training data providing unit 201 is adapted to provide a training data set for training a trainable virtual edge device model. The training data comprises past, i.e. already existing, monitoring data generated by a respective edge device for which the virtual device model shall be trained and information on a corresponding past behaviour of the respective edge device. The virtual edge device model providing unit 202 is adapted to provide a trainable virtual edge device model. Generally, such a trainable virtual edge device model can refer to any known machine learning based algorithm, for instance, to a neural network, a trainable regression model, a classifier, etc. The training unit 203 is then adapted to train the provided virtual edge device model by applying the virtual edge device model to the training data. The virtual edge device model is then trained, utilizing known artificial intelligence training methods, until the respective virtual device model is adapted to provide a functional behaviour of the respective edge device as output when provided with corresponding monitoring data as input. The respective virtual edge device model can then be stored, for instance, on a virtual edge device model storage unit on which a plurality of virtual edge device models for respective edge devices are stored. Preferably, for each edge device monitored by the monitoring device 120 an individual virtual edge device model is provided, for example, a digital twin of the edge device. However, in some cases it may be possible to utilize the same virtual edge device model for more than one edge device, in particular, when the virtual edge device model has been trained accordingly with respective monitoring data and corresponding behaviour and further when it is expected that the respective edge devices show the same behaviour under the same circumstances. For example, if edge devices are of the same making, comprise the same construction, orwork in the same manner and are provided under similar circumstances, such an assumption can be a good approximation and allows to utilize one virtual edge device model for more than one edge device.

The device model providing unit 122 can then refer to or be in communicative contact with a storage unit on which the respective virtual device models for the edge devices are stored. The device model providing unit 122 can then be adapted to select the respective virtual device model for an edge device that shall be monitored and to provide the same, for instance, to the edge device behaviour prediction unit 123.

The edge device behaviour prediction unit 123 is then adapted to apply the provided virtual device model to the provided existing monitoring data of the respective edge device to determine an expected current and/or future functional behaviour of the respective edge device. In particular, the monitoring data of the respective edge device is provided as input to the provided virtual device model which then provides as output a current and/or future functional behaviour of the respective edge device. The current and/or future functional behaviour can refer to providing a prediction of the functional behaviour for respectively defined time periods, for instance, for a time period with a predetermined time frame around a point in time for which the last existing monitoring data was utilized as input for the virtual device model or to a time period with a time frame lying completely in a future with respect to the point in time of the utilized last existing monitoring data. In this context, the functional behaviour can be determined for one point in time or also continuously for a respective time period. Such a time period can refer to a few seconds, a few minutes or even to a few hours depending on the respective application, the expected changeability of an edge device behaviour, the training of the virtual device model, the quality of the provided monitoring data, etc.

The abnormality detection unit 124 is then adapted to detect an abnormal behaviour of a respective edge device based on an expected current and/or future functional behaviour of the respective edge device. For example, the abnormality detection unit 124 can be adapted to compare an expected current and/or future functional behaviour of the respective edge device with a predetermined threshold for the respective quantity and depending on the comparison to decide whether the expected current and/or future functional behaviour is expected to refer to an abnormal behaviour of the edge device. However, the expected current and/or future functional behaviour of the respective edge device can also be utilized as a baseline for the normal functioning of the respective edge device, for instance, if the virtual edge device model has been trained only with monitoring data relating to a normal functional behaviour of the respective edge device. In this case, the expected current and/or future functional behaviour utilized as baseline can be compared with an actual functional behaviour of the edge device at respective expected time points. For example, if the expected future functional behaviour indicates a processor temperature of an edge device with a specific value in 10 minutes and the actual processor temperature of the edge device after the 10 minutes deviates from the expected value of the processor temperature and if this deviation lies above a predetermined threshold, the abnormality detection unit 124 can be adapted to detect an abnormal behaviour of the edge device for this case.

The controlling unit 125 is then adapted to provide control signals based on the detected abnormal behaviour of a respective edge device that cause a reaction, preferably, related to the detected abnormal behaviour of the respective edge device. For example, the controlling unit 125 can be adapted to provide control signals that directly control the respective edge device that initiate, for instance, a shutdown or restart of a respective edge device. However, the control signals can also be adapted to indicate potential abnormal behaviour of an edge device, for example, to an operator of the industrial plant 110 such that the operator can react accordingly, e.g. by sending a maintenance crew to the respective edge device or taking the respective edge device offline from the further control of the industrial plant 110. In a preferred embodiment, the controlling unit 125 is adapted to utilize a control model for determining the control signals. The control model can, for instance, refer to specific relations between determined abnormal behaviours and respective control signals that can be provided, for instance, in form of a lookup table. However, it is preferred that the controlling model refers to a trainable control model that can be trained based on data related to past abnormal behaviour and corresponding past reactions with respect to one or more edge devices.

Optionally, the device 120 can further comprise a retraining unit 126 that is adapted to compare continuously an expected current and/or future behaviour predicted by a virtual device model with an actual and/or future behaviour of the edge device indicated, for instance, by current and/or future monitoring data. If a difference between the expected behaviour and the actual behaviour is determined lying, for instance, above a predetermined threshold, the retraining unit 126 can be adapted to retrain the respective virtual device model based on the data referring to the different behaviour of the edge device and the corresponding monitoring data. If such a retraining unit 126 is present, this allows to continuously further adapt an individualized virtual device model to a respective edge device and thus to continuously improve the prediction with respect to the current and/or future behaviour provided by the virtual edge device model.

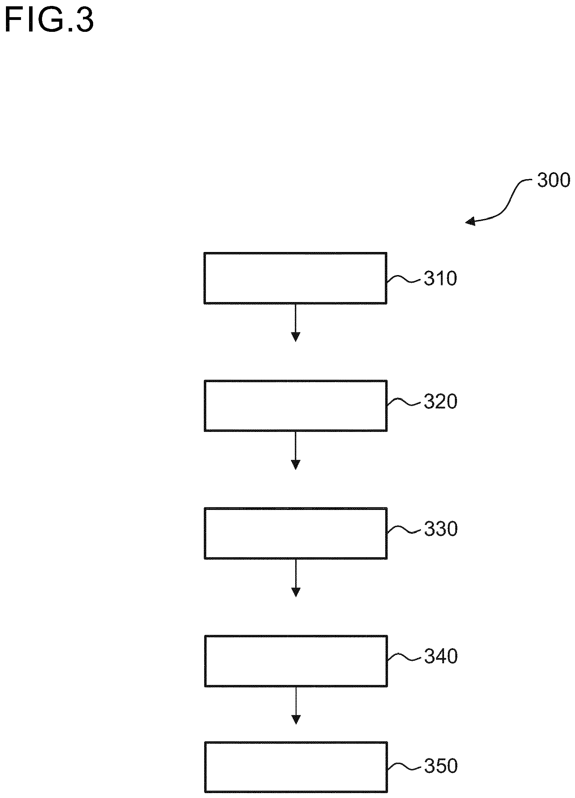

Fig. 3 shows schematically and exemplarily a method 300 for monitoring a plurality of edge devices that can be performed, for instance, by the device 120 as described above. The method 300 comprises a step 310 of providing monitoring data for at least one, preferably, for each, of the plurality of edge devices, in accordance with the above described principles. Further, the method 300 comprises a step 320 of providing for a respective edge device a respective virtual device model that is adapted to model a functional behaviour of the respective edge device based on monitoring data of the respective edge device. Generally, the steps 310 and 320 can be performed in any arbitrary order or even at the same time. In step 330, the respective provided virtual device model is then applied to existing monitoring data of the respective edge device to determine an expected current and/or future functional behaviour of the respective edge device. In the following step 340, an abnormal behaviour of a respective edge device is then detected based on the expected current and/or future functional behaviour of the respective edge device, for instance, in accordance with the principles described already above. In the final step 350 then control signals are provided for causing a reaction based on the detected abnormal behaviour of the respective edge device.

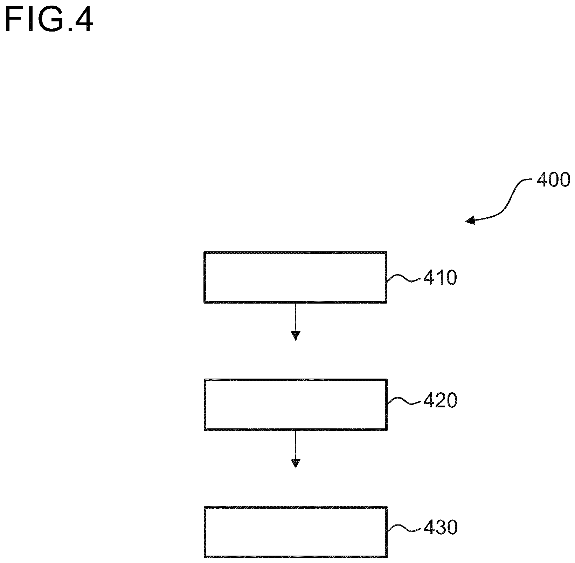

Fig. 4 shows schematically and exemplarily a flow chart of a method 400 for training a virtual device model that can be utilized, for instance, by the device as described with respect to Fig. 1 or the method as described with respect to Fig. 3. The method 400 can be performed, for instance, by respective units of the training apparatus described with respect to Fig. 2. In a step 410, the method 400 comprises providing training data that comprises past monitoring data of an edge device and corresponding past behaviour of the edge device. In a step 420, a trainable virtual edge device model, as described, for instance, above, is then provided. In a last step 430, the virtual edge device model is then trained by applying the virtual edge device model to the training data and training the virtual edge device model such that the respective virtual edge device model is adapted to model a functioning of the respective edge device based on monitoring data. The trained virtual edge device model can then be provided after the training, for instance, to a respective storage unit.

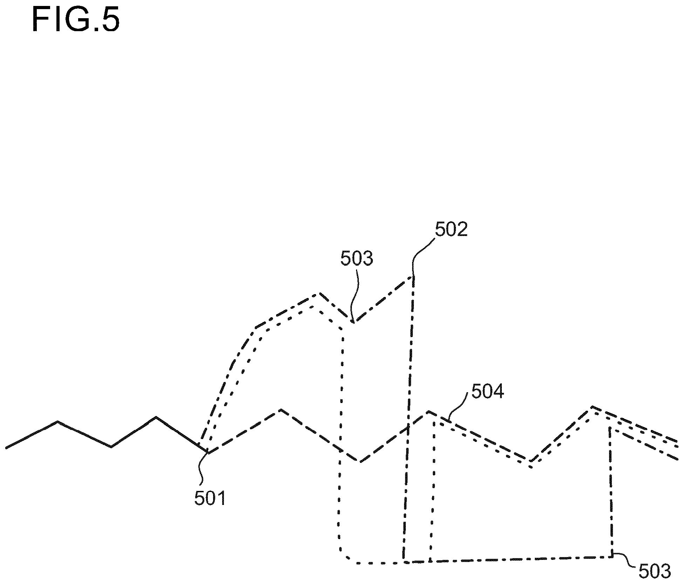

Fig. 5 shows schematically the effects of utilizing the device or method, as described above, for monitoring an edge device. In particular, Fig. 5 shows schematically the progress of a functional behaviour of an edge device for two different scenarios. For example, the curves shown in Fig. 5 can represent as functional behaviour a processor temperature of an edge device. The continuous line until point 501 represents a normal behaviour of the processor temperature of the edge device as measured and provided so far, for instance, as part of the monitoring data over time such that a point, for instance, point 501, can be understood as a time point. In accordance with the principles discussed above, a virtual device model is then applied to the monitoring data to determine an expected future functional behaviour relating in this case to a baseline of the processor temperature when the edge device is functioning normal also in the future. The dashed line following the point 501 represents this expected functional behaviour of the edge device in the future as predicted by the virtual device model. However, the actual monitoring data, in this case, the processor temperature, starts to deviate at point 501 from the predicted future processor temperature. In the following, the first scenario will be represented by the dashed dotted line and refers to the case in which the device 120 is not used when the edge devices are monitored in accordance with the present invention, whereas the second scenario is represented by the dotted line and represents the case where the edge device is monitored utilizing a device 120 and method 300 as described above. Following the first scenario, the temperature of the processor deviates from the normal temperature of the processor which is, however, not noticed by any monitoring at this point. However, the increased temperature of the processor leads at point 502 to an overall failure of the edge device indicated by the falling down to a straight line that can be represent, for instance, an inactivity of the edge device.

In the today's used monitoring systems, only at this point the system would notice the complete failure of the edge device, for instance, due to the failure of provided corresponding technical data to a control system of the industrial plant and would then notify, for instance, an operator to check the respective edge device. Due to the late notice and the complete failure of the edge device in most cases, as indicated also here, this will lead to a longer maintenance time and even to a complete replacement of the edge device to get the edge device or in some cases a new respective edge device online, which in Fig. 5 is the case at point 503. The second scenario indicated by the pointed line utilizes for monitoring of the edge device the device 120 and method 300 as described above. In this example, the device 120, for instance, utilizing the units described with respect to Fig. 1, is adapted to compare actual functional behaviour of the edge device, for instance, actual monitoring data, with the predicted functional behaviour of the edge device, for instance, with predicted monitoring data of the edge device. In this scenario, the difference between the actual functional behaviour of the edge device and the expected functional behaviour of the edge device will reach at point 503 a respective, predetermined criteria that indicate an abnormal behaviour of the edge device. For example, in this case a criterion can be that the difference lies above a predetermined threshold for a predetermined time period. At this point, the device, in particular, the controlling unit 126, is adapted to provide control signals to the edge device that initiate a shutdown of the edge device, as indicated, for instance, by a lookup table in which for an abnormal behaviour based on a too high processortemperature a shutdown of the edge device is suggested. Moreover, the controlling unit 126 can at this point directly initialize a notification to an operator of the industrial plant 110 that the edge device has to be shut down due to the too high processor temperature. Thus, the operator can directly initiate a maintenance action on the edge device that may in most cases allow to repair the respective edge device before a complete failure has occurred and to bring up the respective edge device online much faster, in this case, at point 504.

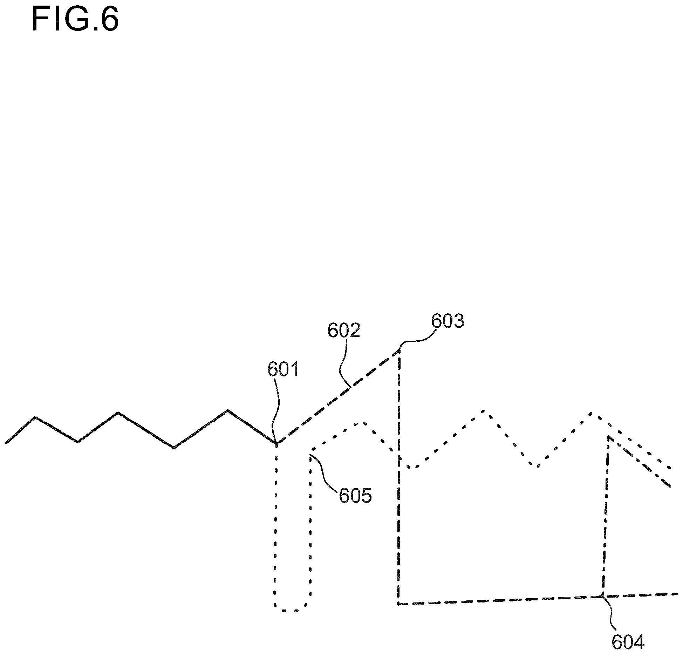

Fig. 6 shows a similar diagram as Fig. 5, wherein in this case again two scenarios are shown in relation to the prediction provided by the device 120. In particular, again the continuous line refers to monitoring data or a functional behaviour of the edge device as already measured or provided. However, in this case the virtual device model is adapted not to predict a baseline, i.e. a normal behaviour, of the edge device, but has been trained to predict based on the monitoring data also an abnormal behaviour of the edge device. For example, in this case based on some of the monitoring data the virtual device model predicts for the edge device exemplarily represented in Fig. 6 starting from point 602 a behaviour of a further increasing, for instance, of the processor temperature, and for point 603 a complete failure of the edge device. In a normal monitoring system it is likely that exactly this behaviour would occur and that only at point 603 an operator would be noted of the failure of the edge device leading to a maintenance action bringing the edge device or a new edge device online at point 604 as indicated by the pointed dashed line. However, in this scenario, utilizing the device 120 and method 300 according to the principles described above, the abnormality detection unit 124 is adapted to detect based on the expected functional behaviour determined by the virtual device model that an abnormal behaviour will occur in the near future and the controlling unit 125 can be adapted, for instance, to directly shut down the edge device to prevent a further damage to the edge device. Thus, already at point 601 the edge device will be shut down and an operator will be informed. This will probably lead to a fast and easy repair of the already faulty edge device before a complete failure of the edge device and bringing the edge device online already, for instance, at point 605 as indicated by the pointed line. In some embodiments, the device 120 can even be adapted such that it utilizes a virtual device model that has been trained to directly predict a maintenance action for an edge device based on the monitoring data that is even further away in the future. For instance, in the scenario as shown in Fig. 6 the device can predict, i.e. suggest, a maintenance action scheduled for point 602 before the real difference between a normal behaviour of the edge device and an abnormal behaviour of the edge device occurs. Thus, alternatively to directly shutting down the edge device, the controlling unit 125 can be adapted to notify an operator that a maintenance action is necessary for the edge device at the latest at point 602 such that the scheduling of respective maintenance actions is easier and more plannable. Moreover, this can even reduce shutdowns and downtimes for edge devices even further.

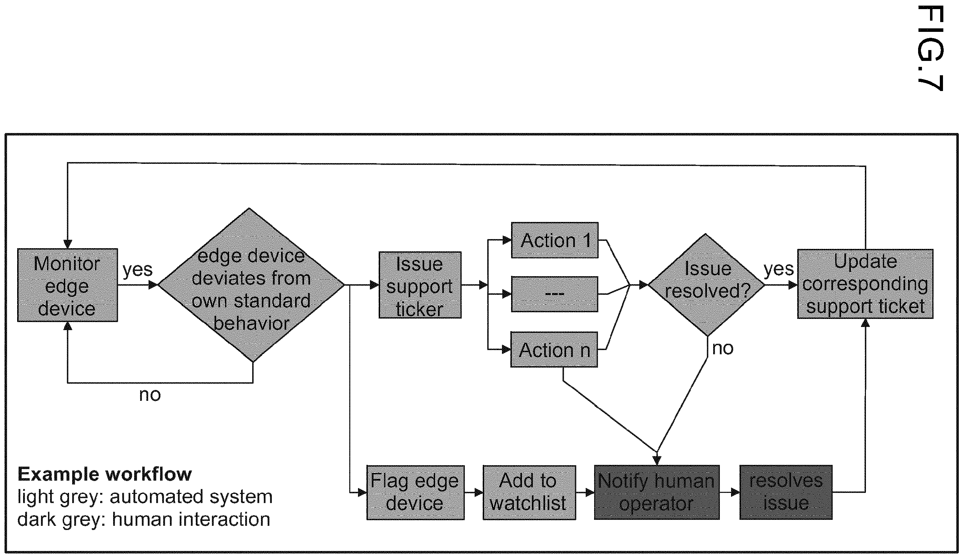

Fig. 7 shows an exemplary workflow that can be utilized by the device 120 to monitor edge devices. In this case, an edge device is monitored, for instance, in accordance with the method 300 and principles described above utilizing, for instance, by the device 120 as described in Fig. 1. At some point it is determined by the device 120, for instance, by the abnormality detection unit 124, that the edge device deviates from its own standard behaviour, for instance, by comparing actual monitoring data of the edge device with the expected functional behaviour of the edge device. If this deviation is detected, for instance, by the abnormality detection unit 124, the controlling unit 125 provides control signals. These control signals can, for instance, cause in a maintenance system of the industrial plant 110 the flagging of the edge device and the issuing of a support ticker that indicates that further action shall be taken by the controlling unit 125. If the controlling 125 unit is adapted accordingly, for instance, by utilizing a controlling model, the controlling unit 125 can then be adapted to issue control signals that initiate different actions that can be indicated by the control model for solving the respective problem. For example, such an action can refer to restarting the edge device or reconfiguring one or more functional parameters of the edge device. At the same time, the flagging of the edge device leads to an adding of the edge device to a watch list such that it is ensured that at some point in time, if the issue is not resolved, a human operator is notified to resolve the issue, for instance, if a maintenance action is necessary. If the issue is then resolved, for instance, by one or more of the actions initiated by the controlling unit 125 or by the human operator, the system can indicate this by updating the corresponding support ticket and then continue a normal monitoring of the edge device.

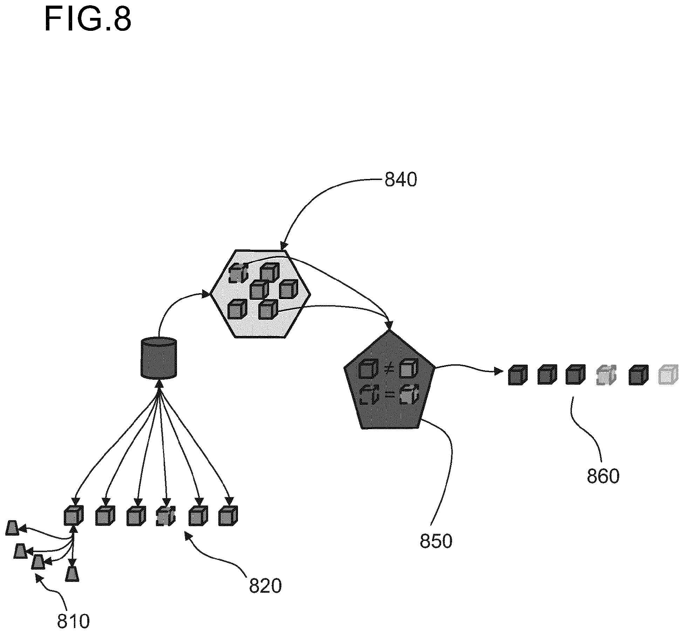

Fig. 8 shows schematically and exemplarily a further representation of the principles of the invention as discussed above. In this case, equipment 810, for instance, equipment of an industrial plant, is monitored by one or more edge devices 820. For example, the edge devices 820 can themselves refer to sensors that measure technical data of the equipment or can receive technical data generated by the equipment. The edge devices 820 themselves, however, generate also monitoring data that comprises preferably at least one of a processor temperature, a processor usage over the last 15 minutes in average, a memory usage, an SD card/SSD card health state, a remount accessibility, an amount of network traffic in and out of the edge device 820, a number or identity of open ports, a number of data transfers per day, an amount of data transfers per day, a destination of data transfers and an origin of data transfers. Respective data referring directly to the monitoring data or referring to the technical data measured and/or collected by the edge device 820 can then be provided to a data collector, for instance, a cloud storage, from which a device, like the device 120 discussed with respect to Fig. 1, can access the data. The device 120 can then be regarded as being part, for instance, of a decision center 850 for managing the edge devices 820 and can utilize virtual device models referring in this example to virtual twins of the edge devices 820 as indicated by reference number 840. The symbols indicated by reference number 860 then symbolize the controlling performed, for instance, by the controlling unit 125 referring to decisions like taking an edge device 820 offline or keeping an edge device 820 online dependent on the expected current and/or future functional behaviour of the edge devices 820 as predicted by a respective virtual twin 840.

Generally, the invention as described above allows to provide, for instance, an efficient, secure, and low-cost management of a fleet of edge devices from tens to several thousands of edge devices. Currently, most solutions only manage the operating system and applications or perform basic monitoring. However, no solutions currently address the reliability and security of a fleet of edge devices in an automated way. This is especially true in an enterprise context where the solution has to be able to comply with strict cyber security guidelines and network segregation between edge devices operating in different operation layers than known device management solution. In this context, the invention as described above allows, for example, to manage a huge fleet of edge devices in a corporate or industrial setup on a global scale with small, highly efficient teams.

In a preferred embodiment, the device 120 is adapted to allow to provide a predictive maintenance, for instance, as described with respect to Fig. 6. Utilizing such an embodiment can lead to a zero downtime of the edge device. In particular, the device, for example, the abnormality detection unit 124, can be adapted to predict a necessary maintenance, for example, by providing a point in time at which a maintenance action is advisable, based on the various criteria gathered for the edge devices, for example, as part of the monitoring data. In particular, a virtual edge device model, as described in more detail above, can be trained to predict the next replacement of the edge device and/or a part of the edge device, for example, an SD card.

Further, it is preferred that the device 120 is adapted for threat detection, for instance, by detecting any deviation of the actual behavior of the edge device from a predicted baseline behavior of the edge device, as described above.

In a preferred embodiment, the device 120 is adapted to allow for a continuous learning, in particular, of the virtual edge device model and, if utilized, the controlling model. In particular, as a respective data pool for the above mentioned models grows for each individual device and for the plurality of devices as a whole, the device 120 can be adapted to provide for a retaining of the respective models such that the models are refined and/or newly trained models are utilized.

In a preferred embodiment, the device 120 is adapted to take decisive action. In particular, upon detection of an anomaly, for instance, by the abnormality detection unit 124, the controlling unit 125 is preferably adapted to provide control signals that initiate an action or a set of actions. The actions can be predefined and can be as simple as flagging the misbehaving edge device for reviewing by a human operator or as complex as launching a whole process, e.g. order a new edge device and prepare the device management system to receive said edge device and prepare the copying of the current configuration to a new device, and monitoring the resolution. Preferably, a control model is utilized that can learn over time, for example, by assisted learning methods, such that the actions suggested by the control model in response to various "stimuli", i.e. detected abnormalities, become over time more accurate thus increasing the level of trust in the system. As a result, the degree of automation achieved by the device 120 is expected to increase over time up to a point where only minimal input from a human is necessary.

Generally, the invention, as described above, allows for a differentiation of the monitoring at the individual edge device level but, at the same time, also allows for bulk actions with respect to the plurality of edge devices. Preferably, the device 120 utilizes monitoring data collected from a device management and monitoring platform as feed. Generally, the device 120 can utilize a virtual device model that is based on pure machine learning models or that can act as a digital twin of an edge device. Generally, a virtual device model referring to a digital twin refers to a digital simulation model that is based on information about the technical components of the edge device and/or functional relations between technical components of the edge device. For example, a digital twin can comprise a simulation of a processor temperature based on known functional relations between a specific processor and a respective data throughput, or other technical data. In contrast thereto, a machine learning based virtual device model does not necessarily comprise any knowledge about the technical specification of technical components of the edge device. For example, a machine learning based model can be trained based on past behavior data, i.e. monitoring data, of an edge device, in order to predict a future behavior without providing a machine learning algorithm being based on any knowledge of the technical components of the edge device. Preferably, the monitoring data generated from the various edge devices and/or from respective digital twins can be used to continuously fine-tune the individual edge device models and provide a "baseline edge device behaviour", for instance, as an expected average edge device behaviour.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the providing of the monitoring data, the providing of the virtual device model, the applying of the virtual device model, or the determining of an abnormal behavior, etc., performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

The invention refers to a device for monitoring a plurality of edge devices provided at an industrial plant and adapted for collecting and/or handling technical data related to production processes and/or assets. The device comprises a data providing unit for providing monitoring data that are based on technical data of a respective edge device. A model providing unit provides a respective model adapted to model a functional behaviour of the respective edge device based on monitoring data. A prediction unit applies the respective model to existing monitoring data to determine an expected behaviour of the respective edge device, and an abnormality detection unit detects an abnormal behaviour based on the expected behaviour of the respective edge device. A controlling unit provides control signals for causing a reaction based on the detected abnormal behaviour.

## Claims

1. A device (120) for monitoring a plurality of edge devices (111, 112, 113, 114, 115), wherein the edge devices (111, 112, 113, 114, 115) are provided at a plurality of locations at an industrial plant (110) and are adapted for collecting and/or handling technical data related to production processes and/or production assets in the industrial plant (110), wherein the device (120) comprises:
a monitoring data providing unit (121) for providing monitoring data that are based on collected technical data for at least one of the plurality of edge devices (111, 112, 113, 114, 115), wherein the monitoring data has been generated by the edge devices (111, 112, 113, 114, 115) and is indicative of a functional state of a respective edge device (111, 112, 113, 114, 115),
a device model providing unit (122) for providing for a respective edge device (111, 112, 113, 114, 115) a respective virtual device model, wherein a respective virtual device model is adapted to model a functional behaviour of the respective edge device (111, 112, 113, 114, 115) based on monitoring data of the respective edge device (111, 112, 113, 114, 115),
an edge device behaviour prediction unit (123) for applying for a respective edge device (111, 112, 113, 114, 115) the respectively provided virtual device model to existing monitoring data of the respective edge device (111, 112, 113, 114, 115) to determine an expected current and/or future functional behaviour of the respective edge device (111, 112, 113, 114, 115),
an abnormality detection unit (124) for detecting an abnormal behaviour of a respective edge device (111, 112, 113, 114, 115) based on the expected current and/or future functional behaviour of the respective edge device (111, 112, 113, 114, 115), and
a controlling unit (125) for providing control signals for causing a reaction based on the detected abnormal behaviour of a respective edge device (111, 112, 113, 114, 115).

2. The device (120) according to claim 1, wherein the virtual device model refers to a machine learning based model that is trained based on past monitoring data and a corresponding known behaviour of the edge device (111, 112, 113, 114, 115).

3. The device (120) according to claim 2, further comprising a retraining unit (126) adapted to compare continuously an expected current and/or future behaviour of an edge device (111, 112, 113, 114, 115) with an actual current and/or future behaviour of the edge device (111, 112, 113, 114, 115) indicated by current and/or future monitoring data, and, if a difference between the expected behaviour and the actual behaviour is determined lying above a predetermined threshold, retrained the virtual device model based on the differing behaviour of the edge device (111, 112, 113, 114, 115) and the corresponding monitoring data.

4. The device (120) according to any of the preceding claims, wherein the expected current and/or future behaviour of an edge device (111, 112, 113, 114, 115) is utilized as a baseline for the monitoring data of the edge device (111, 112, 113, 114, 115), wherein the baseline refers to a normal functioning of the edge device (111, 112, 113, 114, 115), and wherein the abnormality detection unit (124) is adapted to detect abnormal behaviour of the edge device (111, 112, 113, 114, 115) by comparing the expected baseline with actual monitoring data of the edge device (111, 112, 113, 114, 115), wherein an abnormal behaviour is determined, when the difference between the baseline and the actual monitoring data lies above a predetermined threshold.

5. The device (120) according to any of the preceding claims, wherein the device (120) further comprises a control model providing unit adapted to provide a control model for controlling the edge devices (111, 112, 113, 114, 115), wherein the control model is adapted to determine control signals for causing a reaction based on a detected abnormal behaviour and wherein the controlling unit (125) is adapted to utilize the control model to provide control signals based on the detected abnormal behaviour.

6. The device (120) according to claim 5, wherein the control model refers to a machine learning based control model that has been trained based on past detected abnormal behaviours of edge devices (111, 112, 113, 114, 115) and corresponding utilized past control signals.

7. The device (120) according to any of the preceding claims, wherein the control signals refer to signals that cause a shutdown of an edge device (111, 112, 113, 114, 115), if an abnormal behaviour is detected that indicates a failure of the edge device (111, 112, 113, 114, 115) within a predetermined time in the future.

8. The device (120) according to any of the preceding claims, wherein the virtual device model is further adapted to predict an expected date for a necessary maintenance action for the respective edge device (111, 112, 113, 114, 115) based on the provided monitoring data, wherein the edge device behaviour prediction unit (123) is adapted to determine the expected maintenance action date by applying a provided virtual device model to the monitoring data of a respective edge device (111, 112, 113, 114, 115) and wherein the controlling unit (125) is further adapted to provide control signals for causing a reaction based on the determined expected maintenance date for the edge device (111, 112, 113, 114, 115).

9. A system (100) comprising:
a plurality of edge devices (111, 112, 113, 114, 115) provided at a plurality of locations at an industrial plant (110) and are adapted for collecting and/or handling technical data related to production processes in the industrial plant (110), wherein an edge device (111, 112, 113, 114, 115) is adapted to provide monitoring data indicative of a functional state of a respective edge device (111, 112, 113, 114, 115), and
a device (120) according to any of the preceding claims.

10. A training apparatus (200) for training a virtual device model, wherein the training apparatus (200) comprises:
a training data providing unit (201) for providing training data, wherein the training data comprises past monitoring data of an edge device (111, 112, 113, 114, 115) and a corresponding past behaviour of the edge device (111, 112, 113, 114, 115),
a virtual edge device model providing unit (202) for providing a trainable virtual edge device model, and
a training unit (203) for training the virtual edge device model by applying the virtual edge device model to the training data and training the virtual edge device model such that the respective virtual edge device model is adapted to model a functional behaviour of the respective edge device (111, 112, 113, 114, 115) based on monitoring data and for providing the trained virtual edge device model after the training.

11. A method (300) for monitoring a plurality of edge devices (111, 112, 113, 114, 115), wherein the edge devices (111, 112, 113, 114, 115) are provided at a plurality of locations at an industrial plant (110) and are adapted for collecting and/or handling technical data related to production processes in the industrial plant (110), wherein the method (300) comprises:
providing (310) monitoring data that are based on collected technical data for at least one of the plurality of edge devices (111, 112, 113, 114, 115), wherein the monitoring data has been generated by the edge devices (111, 112, 113, 114, 115) and is indicative of a functional state of a respective edge device (111, 112, 113, 114, 115),
providing (320) for a respective edge device (111, 112, 113, 114, 115) a respective virtual device model, wherein a respective virtual device model is adapted to model a functional behaviour of the respective edge device (111, 112, 113, 114, 115) based on monitoring data of the respective edge device (111, 112, 113, 114, 115),
applying (330) for a respective edge device (111, 112, 113, 114, 115) the respectively provided virtual device model to existing monitoring data of the respective edge device (111, 112, 113, 114, 115) to determine an expected current and/or future functional behaviour of the respective edge device (111, 112, 113, 114, 115),
detecting (340) an abnormal behaviour of a respective edge device (111, 112, 113, 114, 115) based on the expected current and/or future functional behaviour of the respective edge device (111, 112, 113, 114, 115), and
providing control signals for causing a reaction based on the detected abnormal behaviour of a respective edge device (111, 112, 113, 114, 115).

12. A training method (400) for training a virtual device model, wherein the training method (400) comprises:
providing (410) training data, wherein the training data comprises past monitoring data of an edge device (111, 112, 113, 114, 115) and a corresponding past behaviour of the edge device (111, 112, 113, 114, 115),
providing (420) a trainable virtual edge device model, and
training (430) the virtual edge device model by applying the virtual edge device model to the training data and training the virtual edge device model such that the respective virtual edge device model is adapted to model a functioning of the respective edge device based on monitoring data and providing the trained virtual edge device model after the training.

13. A computer program product for monitoring a plurality of edge devices (111, 112, 113, 114, 115), wherein the computer program product comprises program code means for causing the device (120) and/or system (100) of claims 1 or 9, respectively, to execute the method (300) according to claim 11.

14. A computer program product for training a virtual device model, wherein the computer program product comprises program code means for causing the apparatus (200) of claim 10 to execute the method (400) according to claim 12.
